# EUROPÄISCHE PATENTANMELDUNG

(11) **EP 1 002 707 A1**
(43) Veröffentlichungstag der Anmeldung: **24.05.2000**
(21) Anmeldenummer: 99122161.5
(22) Anmeldetag: 05.11.1999
(51) Int. Cl.: B60T 1/14

(54) **Notfallbremsvorrichtung**

(30) Priorität: 05.11.1998 DE 19851129
(71) Anmelder: Gottardi, Alberto, 39012 Meran (IT)
(72) Erfinder: Gottardi, Alberto, 39012 Meran (IT)
(74) Vertreter: Becker Kurig Straus

(57) **Zusammenfassung**

Notfallbremsvorrichtung für auf Rädern 1 laufende Fahrzeuge, mit einem am Chassis 3 des Fahrzeuges zugfest zu befestigenden, die Aufstands- oder Kontaktfläche des Fahrzeugs zum Boden vergrößernden mechanischen Elementes 5, das eine starre schaufelartige Form aufweist und zum Boden 2 hin profiliert ist, wobei das Element 5 so ausgebildet ist, daß es nach dem Auslösen der Notfallbremsvorrichtung auf dem Boden in Bewegungsrichtung vor dem zu bremsenden Rad zu liegen kommt, so daß das zu bremsende Rad auf dieses auffährt bzw. das Element 5 unter das Rad gezogen wird, wobei das Element 5 in seinem unter dem Rad zu liegen kommenden Teil 6 in Fahrtrichtung 4 in der Höhe keilförmig zunimmt und in Fahrtrichtung 4 ab einem bestimmten Bereich auf der dem Rad 1 zugewandten Seite mit Rollen 9 versehen ist.

## Beschreibung

Die vorliegende Erfindung bezieht sich auf eine Notfallbremsvorrichtung für mit Rädern versehene Fahrzeuge, wie durch den Oberbegriff des Patenanspruches 1 beschrieben.

Es ist bekannt, daß mit Rädern versehene Fahrzeuge und hierbei vor allem schwere Kraftfahrzeuge und solche, die gefährliche Ladungen transportieren, aber auch Personenkraftfahrzeuge, Busse, Schienenfahrzeuge und ähnliches immer wieder in schwere und schwerste Unfälle verwickelt sind, die häufig auf Bremsdefekte, den Ausfall der Bremsen, oder selbst bei funktionierenden Bremsen auf eine mangelnde Bodenhaftung der Räder während des Bremsvorganges zurückzuführen sind. In allen diesen genannten Fällen kommt das jeweilige Fahrzeug, trotz der Absicht des Fahrers, es zu bremsen, nicht oder nicht rechtzeitig zum Stillstand, um einen Unfall mit fatalen und oftmals tödlichen Folgen zu verhindern.

Eine der Ursachen für dieses mangelnde Bremsverhalten der Fahrzeuge ist wohl darauf zurückzuführen, daß bei diesen auf Rädern rollenden Fahrzeugen die Aufstandsfläche der jeweiligen Räder auf dem Boden, der Straße oder der Schiene sehr klein ist und nur einen Bruchteil des Radumfanges ausmacht. Diese kleine Aufstandsfläche erzeugt bei hohen Geschwindigkeiten oder aber bei entsprechend starkem Gefälle oder einer ungünstigen Beschaffenheit der jeweiligen mit dem entsprechenden Rad in Kontakt stehenden Oberfläche trotz Griffigkeit eines eventuell vorhandenen Profils des Rades und/oder auch bei blockiertem Rad eine zu geringe Reibung, um das jeweilige Fahrzeug rechtzeitig, d.h. innerhalb einer vertretbaren Distanz und Zeit, zum Stillstand zu bringen.

Herkömmliche Bremssysteme, mit denen radgebundene Kraftfahrzeuge gebremst werden, und die in der Regel auf die Drehung des Rades einwirken, können daher trotz intakter Funktion entweder unwirksam sein bzw. kann es bei Überlastung derselben relativ leicht zu einer Fehlfunktion oder sogar zu einem Ausfall kommen. Ab diesem Moment ist das jeweilige Fahrzeug damit mitsamt seinen Insassen mehr oder weniger der der jeweiligen Geschwindigkeit entsprechenden Massenträgheit ausgeliefert, ohne daß der Fahrer noch einen rettenden Einfluß auf das Verhalten des Fahrzeuges nehmen könnte.

Aus dem Dokument DE G 87 11 252.3 ist ein Notbremskeil für LKW, Sattelzüge, Tankzüge und ähnliches bekannt, der sich bei Ausfall des Bremssystemes vor die jeweiligen Räder klemmt und damit eine Bremswirkung erzeugt.

Aus dem Dokument DE 29 49 628 ist eine Brems- und Sicherheitsvorrichtung für Lastfahrzeuge bekannt, mit einem keilförmigen Bremsklotz, der durch einen pneumatischen Hauptzylinder in den keilförmigen Raum zwischen Straßenoberfläche und Fahrzeugrad bewegt wird, so daß eine Bremswirkung erzielt wird.

Schließlich ist aus dem Dokument DE-OS 23 39 846 eine Bremsvorrichtung für Fahrzeuge bekannt, bei der ein vor dem jeweiligen Rad angeordnetes Element im Bedarfsfall unter das jeweilige Rad geschoben und in dieser Position gehalten wird.

Trotz der unbestreitbaren Vorteile dieser bekannten Systeme weisen dieselben aber nach wie vor ein deutliches Weiterentwicklungspotential auf, das eine Verbesserung der Bremswirkung des jeweiligen radgebundenen Fahrzeuges ermöglicht. Darüber hinaus sind die bekannten Systeme in der Regel sehr aufwendig und benötigen störungsanfällige elektrische oder pneumatische Hilfseinrichtungen, die die Funktion der eigentlichen Bremsvorrichtungen erst ermöglichen.

Die Aufgabe der vorliegenden Erfindung ist daher eine Notfallbremsvorrichtung, die eine effektive Bremswirkung im Bedarfsfall zur Verfügung stellen kann, die so aufgebaut ist, daß eine sichere Funktionsweise gewährleistet ist.

Diese Aufgabe wird durch die kennzeichnenden Merkmale des unabhängigen Patentanspruches 1 gelöst, wobei zweckmäßige Ausführungsformen durch die Unteransprüche beschrieben sind.

Vorgesehen ist eine Notfallbremsvorrichtung für auf Rädern laufende Fahrzeuge, welche das jeweilige Fahrzeug im Bedarfsfall, d.h. bei einem Ausfall des Bremssystems oder bei schlechter Bodenhaftung "radlos" macht, wodurch das Fahrzeug zum Stillstand gebracht wird bzw. die Wahrscheinlichkeit, den Bremsvorgang innerhalb einer vertretbaren Distanz und Zeit abzuschließen, um ein Vielfaches vergrößert wird und somit auch die Sicherheit der Insassen. Die Notfallbremsvorrichtung bildet ein mechanisches Zusatzsystem, wobei die Aufstands- oder Kontaktfläche bzw. die Aufstandsflächen des Fahrzeuges zum Boden hin vergrößert wird, mit dem Ziel, eine der durch die Massenträgheit erzeugten Fortbewegung entgegenwirkende durch Reibung erzeugte Kraft am Boden hervorzurufen.

Erfindungsgemäß weist die Notfallbremsvorrichtung dabei ein am Chassis des Fahrzeuges zugfest zu befestigendes, die Aufstands- oder Kontaktfläche des Fahrzeuges zum Boden vergrößerndes mechanisches Element, das eine starre schaufelartige Form aufweist und zum Boden hin profiliert ist, wobei das Element so ausgebildet ist, daß es nach dem Auslösen der Notfallbremsvorrichtung auf dem Boden in Bewegungsrichtung vor dem zu bremsenden Rad zu liegen kommt, so daß das bremsende Rad auf dieses auffährt bzw. das Element unter das Rad gezogen wird, wobei die Erfindung wesentlich dadurch gekennzeichnet ist, daß das Element in seinem unter dem Rad zu liegen kommende Teil in Fahrtrichtung in der Höhe keilförmig zunimmt und in Fahrtrichtung ab einem bestimmten Bereich auf der dem Rad zugewandten Seite mit Rollen versehen ist.

In einer bevorzugten Ausführungsform ist die Notfallbremsvorrichtung dabei derart ausgestaltet, daß der unter dem Rad zu liegen kommende Teil, der sich in der Höhe verjüngt, durch ein Gelenk mit dem mit Rollen versehenen Element verbunden ist.

Weiterhin kann die Notfallbremsvorrichtung derart ausgestaltet sein, daß das Element mit einem Arm um eine Drehachse schwenkbar gelagert ist.

Weiterhin kann die Notfallbremsvorrichtung nach Maßgabe der vorliegenden Erfindung derart ausgestaltet sein, daß das Element einen Rollen tragenden Teil und einen das Bodenprofil tragenden Teil aufweist, die über ein Gelenk aneinander angelenkt sind, wobei die Teile voneinander beanbstandet sind, derart, daß ihr gegenseitiger Abstand durch eine Verstelleinrichtung verändert werden kann und eine Meßeinrichtung vorgesehen ist, die den Abstand bzw. die Anlage der Rollen an dem Rad mißt.

Weiterhin kann die Notfallbremsvorrichtung nach Maßgabe der vorliegenden Erfindung derartig ausgestaltet sein, daß das Element durch eine rollentragende Komponente und eine das Bodenprofil tragende Komponente gebildet ist, die in Fahrtrichtung oder Gegenfahrtrichtung des zu bremsenden Fahrzeuges relativ zueinander verschiebbar sind. Der vom Radwinkel abgewandte Teil des Elementes ist vorzugsweise gegenüber dem Boden höhenverstellbar.

Weiterhin kann die Notfallbremsvorrichtung nach Maßgabe der vorliegenden Erfindung derart ausgestaltet sein, daß das Element mit einem eine Schiene für Schienenfahrzeuge seitlich umgreifenden, vorzugsweise nichtrollenden Antientgleiselement versehen ist.

Gemäß einer weiteren Ausführungsform der vorliegenden Erfindung kann das Element vollständig aus Rollenanordnungen bestehen, wobei die Rollen weiterhin mit die letzteren umgebenden Riemenelementen kombiniert sein können.

Weitere Eigenschaften und Vorteile der vorliegenden Erfindung ergeben sich aus der Lektüre der folgenden Beschreibung von bevorzugten Ausführungsbeispielen der vorliegenden Erfindung im Zusammenhang mit den beigefügten Zeichnungen; darin zeigt:
- Fig. 1A-1B: die Seitenansicht einer ersten Ausführungsform der vorliegenden Erfindung;
- Fig. 2A-2B: die Seitenansicht einer zweiten Ausführungsform der vorliegenden Erfindung;
- Fig. 3: die Seitenansicht einer dritten Ausführungsform der vorliegenden Erfindung;
- Fig. 4A-4B: die Seitenansicht einer vierten Ausführungsform der vorliegenden Erfindung;
- Fig. 5A-5E: eine fünfte Ausführungsform der vorliegenden Erfindung;
- Fig. 6A-6F: eine sechste Ausführungsform der vorliegenden Erfindung;
- Fig. 7: die schematische Darstellung der Rollen, wie in der Ausführungsform nach Fig. 6 dargestellt; und
- Fig. 8: die schematische Darstellung einer weiteren Ausführungsform der vorliegenden Erfindung mit der Möglichkeit zur Aufbringung von Bremsreibung an einem lateralen Schienenprofil.

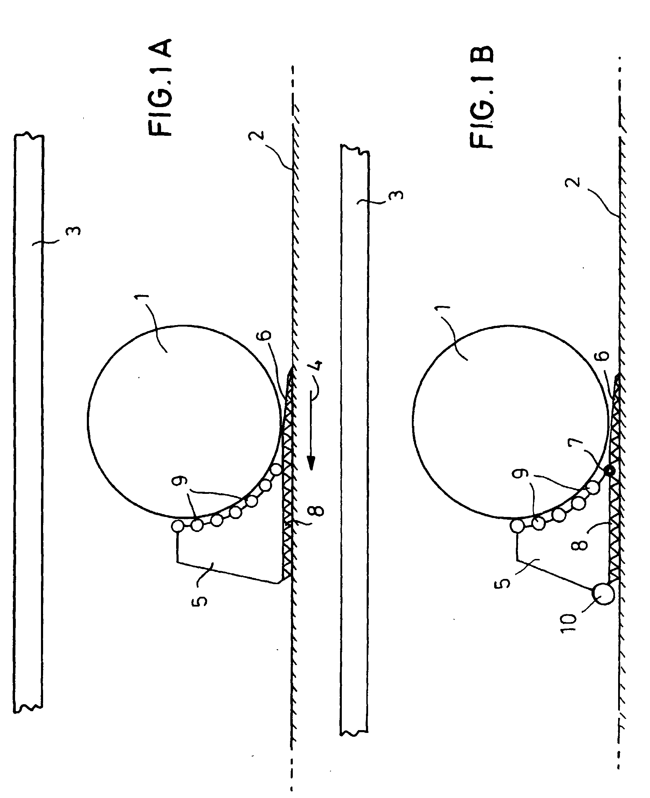

In der Fig. 1 ist eine erste Ausführungsform der Notfallbremsvorrichtung nach Maßgabe der vorliegenden Erfindung dargestellt. Vorgesehen ist dabei in schematischer Weise ein am Chassis 3 eines Fahrzeuges zugfest zu befestigendes, die Aufstands- oder Kontaktfläche des Fahrzeuges zum Boden hin vergrößerndes mechanisches Element 5, das eine starre schaufelartige Form aufweist und zum Boden 2 hin profiliert ist, wobei das Element 5 so ausgebildet ist, daß es nach dem Auslösen der Notfallbremsvorrichtung auf dem Boden 2 in Bewegungsrichtung vor dem zu bremsenden Rad 1 zu liegen kommt, so daß das zu bremsende Rad 1 auf dieses auffährt bzw. das Element 5 unter das Rad gezogen wird. Wie den Figuren 1A und B ohne weiteres zu entnehmen ist, ist das Element 5 dabei in einen unter dem Rad zu liegen kommenden Teil 6, das in Fahrtrichtung 4 in der Höhe keilförmig zunimmt, und in einen in Fahrtrichtung 4 ab einem bestimmten Bereich auf der dem Rad 1 zugewandten Seite mit Rollen 9 versehenen Teil unterteilt.

Der Figur 1B ist eine Abwandlung der in Fig. 1A dargestellten Ausführungsform der vorliegenden Erfindung zu entnehmen, wobei der unter dem Rad zu liegen kommende Teil 6, der sich in der Höhe verjüngt, durch ein Gelenk 7 mit dem mit Rollen 9 versehenen Teilelement 5 verbunden ist.

Der in Fahrtrichtung vordere Bereich des Elementes 5 zum Boden hin ist nach Maßgabe der Ausführungsformen 1A und 1B profilmäßig ausgestaltet und kann darüber hinaus mit Rollen 10 versehen sein, so daß eine Verkeilung des Elementes oder ein pflügendes Verhalten desselben verhindert werden kann. Das rollende Element 10 kann darüber hinaus auch dazu beitragen, bei einer Bremsung durch das Notfallbremssystem die Spur zu halten. Dies ist insbesondere dann von Bedeutung, wenn es sich bei dem zu bremsenden Fahrzeug um ein Schienengebundenes Fahrzeug handelt.

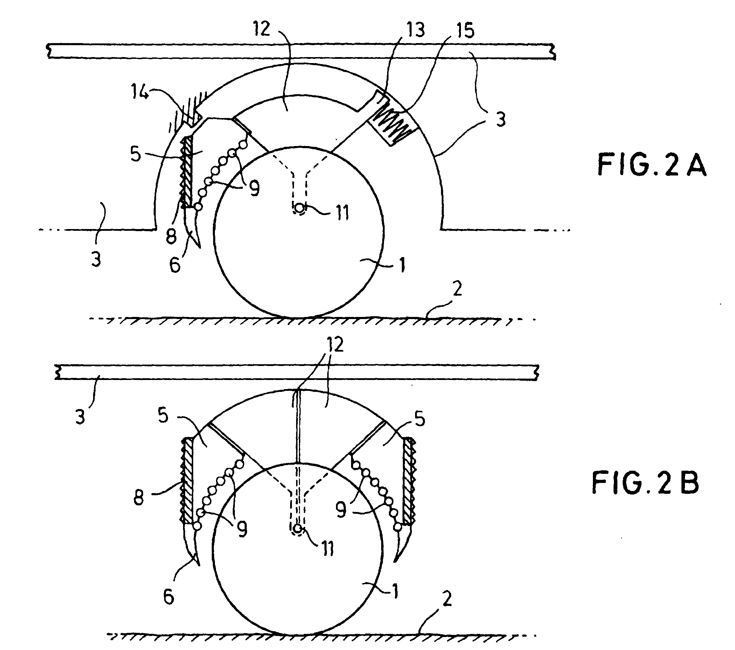

Die Figuren 2A und 2B zeigen eine weitere Ausführungsform der Notfallbremsvorrichtung nach Maßgabe der vorliegenden Erfindung. Gleiche Elemente wie in der Figur 1 sind dabei mit entsprechenden Bezugszeichen versehen. Die Figur 2A zeigt eine Variante, die nur die Bremsung in eine Fahrtrichtung zuläßt. Dabei ist das Element 5 in seiner Ausgangsposition gegen eine Kompressionsfeder 15 verankert. Die Positionierungsbewegung für das Element 5 erfolgt bei Auslösen der Vorrichtung, ausgehend von der Kompressionsfeder 15 über die um einen Stift 11 drehbaren Führungselemente 12 und 13, wobei das Bezugszeichen 13 einen Anschlag bezeichnet, der in ausgelöster Position der Vorrichtung gegen das Widerlager 14 zu liegen kommt, wodurch das Element 5 in Bremsposition zusätzlich stabilisiert wird. In der in Fig. 2A dargestellten Ausführungsform ist das Element 5 bezüglich seines mit Rollen 9 besetzten Teiles ebenso breit oder breiter als das abzubremsende Rad, wobei die Rollen ein sich nach innen verjüngendes doppelkonisches Profil aufweisen können, so daß ein Herausgleiten des Rades 1 aus dem Element 5 verhindert wird. Bei der Bremsung von Zwillingsrädern kann das Element 5 mit einem entsprechenden Profil in dem Zwischenraum zwischen den Rädern zur Wirkung kommen. Dabei besetzen die Rollen vorzugsweise den vom Boden abgewandten Teil des Elementes 5, vorzugsweise jedoch nicht den bodennahen Teil. Dort wird diese Funktion vom Seitenprofil des Elementes übernommen. Die rotatorische Bewegung des Elementes 5 kann auch aktiv erfolgen, indem der Stift 11 angetrieben wird.

In der Fig. 2B ist eine Abwandlung der in Fig. 2A dargestellten Ausführungsform dargestellt, wobei der wesentliche Unterschied darin besteht, daß die dargestellte Anordnung symmetrisch in beide Fahrtrichtungen wirken kann. Hierzu ist das Aufhängungselement 12, welches an dem Stift 11 gelagert ist, zweigeteilt, wobei auch zwei Elemente 5 vorgesehen sind.

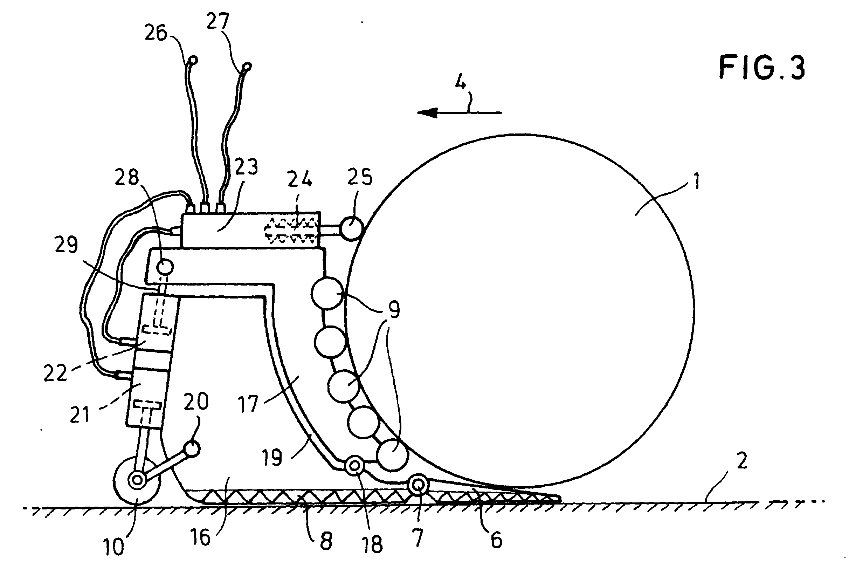

In der Fig. 3 ist die Seitenansicht einer weiteren Ausführungsform der Notfallbremsvorrichtung nach Maßgabe der vorliegenden Erfindung dargestellt. Dabei ist das Element in zwei Komponenten 16 und 17 unterteilt, die über ein Gelenk 18 so aneinander angelenkt sind, daß eine Veränderung der Geometrie der Vorrichtung bzw. des Rad- und Bodenprofiles zueinander möglich wird. Auf diese Weise kann eine Veränderung der Klemmcharakteristik sowie eine Veränderung der Bremseigenschaften erfolgen. In Ruheposition berühren sich die Komponente 16 und 17, so daß der Spalt 19 auf ein Minimum reduziert ist. Wird der Hydraulikzylinder 21 betätigt, was hydraulisch aber auch elektromechanisch erfolgen kann, so wirkt dieser auf das Rad 10, das über den Anlenkpunkt 20 gelenkig mit dem Element 16 verbunden ist, so daß eine Höhenverstellung des Bremsprofiles 8 an seinem in Fahrtrichtung 4 vorderen Ende erfolgt, wodurch sich die Reibfläche 8 reduziert bzw. zum Rad 1 hin verlagert. Eine Druckerhöhung im Hydraulikzylinder 22 hingegen führt zu einer Wirkung über das Pleuel 29 auf das Element 17, so daß es zu einer Öffnung des Spaltes 19 zwischen den Elementen 16 und 17 kommt. Hierdurch verändert sich der Keilwinkel, und es erfolgt eine Verlagerung der Reibfläche zur vorderen Extremität des Profiles 8. Zur optimalen Nutzung sowie für das reibungslose Zusammenwirken der Hydraulikzylinder 21 und 22 ist in der in Fig. 3 dargestellten Ausführungsform eine Meßeinrichtung 23 vorgesehen, die über einen translatorisch bewegbaren Arm 24 mit einer Sensorrolle 25 versehen ist, welche in Anlage an das zu bremsende Rad 1 kommt und wesentliche Informationen, wie die Position des Rades zum Element 5, die Rotationsrichtung, etc. ermittelt und an das System weitergibt, wobei eine direkte oder indirekte Verbindung mit der Bremsdruckleitung bestehen kann. Es sind ferner gezeigt hydraulische Leitungen 26, 27 zur Verbindung über einen gemeinsamen Druckbehälter mit den gegenüberliegenden Elementen, für eine seitensymmentrische Funktion.

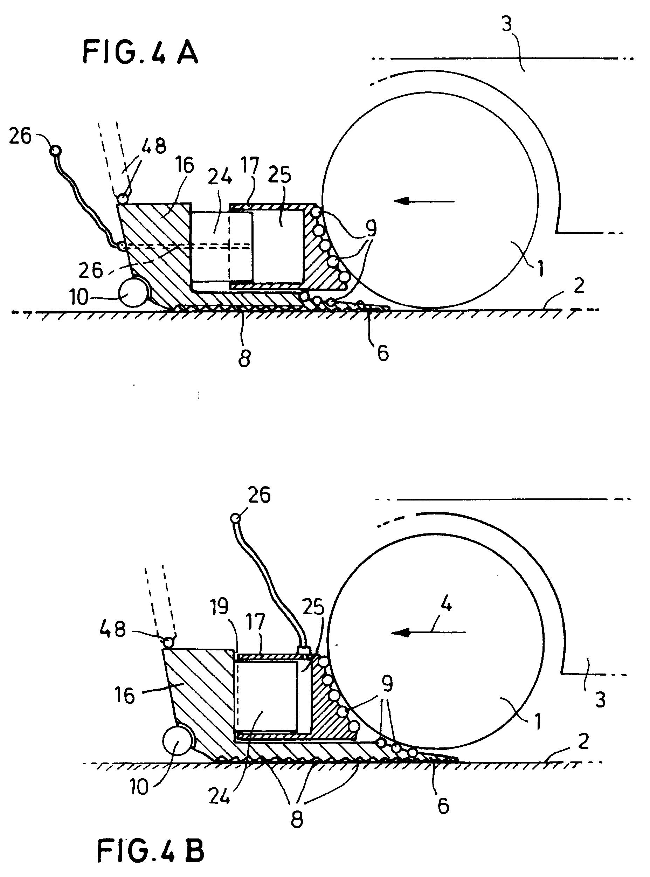

In den Fig. 4A und 4B ist eine weitere Ausführungsform der vorliegenden Erfindung dargestellt, welche insbesondere eine sanfte, stufenweise, exakt seitengleiche sowie unterbrechbare Bremsung ermöglicht, wobei einerseits die Möglichkeit des Auffahrens des Rades 1 vorhanden ist, aber auch die Möglichkeit, das Rad 1 von der Vorrichtung herabzubewegen.

Hierbei besteht das Bremselement wiederum aus zwei Komponenten 16 und 17, wobei das Element 16 die boden- bzw. schienenseitige Komponente darstellt und das Element 17 die mit Rollen 9 besetzte Komponente zum Kontakt mit dem Rad 1.

Das Element 17 bildet in der in Fig. 4A und 4B dargestellten Ausführungsform gleichzeitig das Gehäuse eines Zylinderraumes 25, in dem ein Kolbenelement 24 angeordnet ist, das fester Bestandteil der Komponente 16 ist. Alternativ ist es möglich, daß Zylinderraum und Kolbenelement in ihrer Position vertauscht sind. Die Beaufschlagung des Zylinderraumes 25 erfolgt über eine hydraulische Verbindung 26, die mit einem Druckregelbehälter (nicht dargestellt) verbunden sein kann, sowie mit der an der gegenüberliegenden Seite der Achse vorgesehenen Notfallbremsvorrichtung, so daß eine seitensymmetrische Pressung des Rades 1 erfolgen kann, auch wenn an beiden Rädern einer Achse unterschiedliche Reibungskoeffizienten vorliegen. Die Ausführungsformen nach Fig. 4A und Fig. 4B weisen darüber hinaus eine Gleitrolle 10 auf, die ein Antientgleisprofil für Schienenfahrzeuge aufweisen kann. Die Vorrichtung nach Maßgabe der Fig. 4A und 4B kann darüber hinaus im Bereich des Profiles 8 mit einem zusätzlichen Antientgleisprofil versehen sein, das eine Spurtreue des Elementes gewährleistet. Bei dieser Ausführungsform übernehmen die Rollen 9 des Elementes die Antientgleisfunktion für das Rad in der Auffahrphase des Rades 1 auf das Element 6.

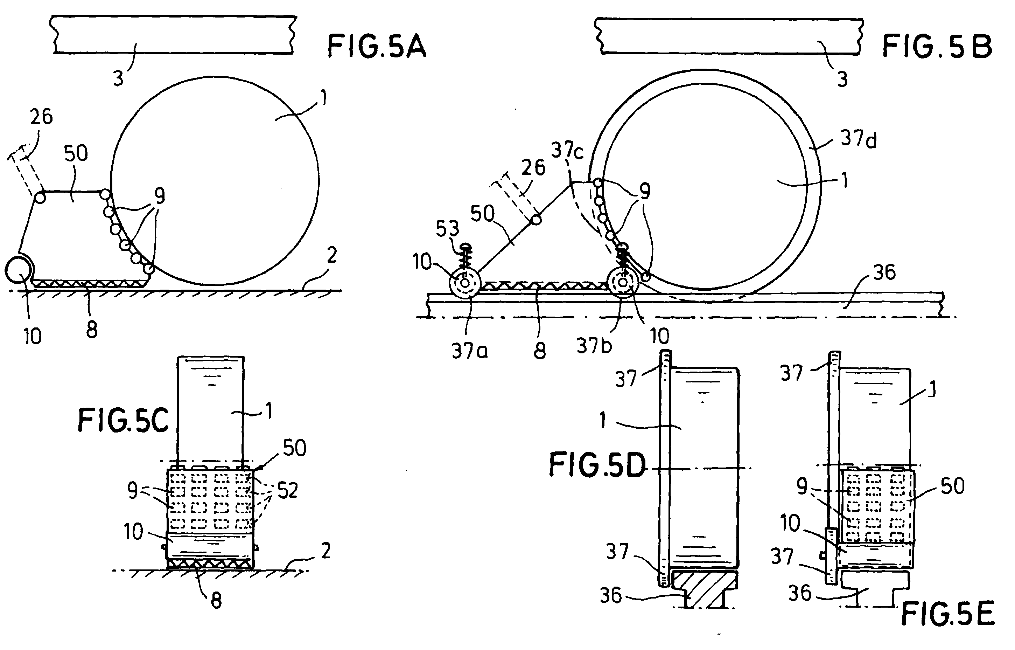

In diesem Sinne sind auch die Ausführungsformen der Fig. 5A bis 5E zu sehen. In der Fig. 5A ist im wesentlichen eine Vorrichtung entsprechend der Ausführungsform nach Fig. 1A und 1B dargestellt, wobei das keilförmige Auffahrelement 6 sowie das Gelenk 7 der Fig. 1B weggelassen wurden. Das Element 5 ist bei der in Fig. 5A dargestellten Ausführungsform durch das Element 50 ersetzt, das nach dem Auslösen in Fahrtrichtung vor oder hinter dem zu bremsenden Rad zu liegen kommt. Es ist keilförmig und auf der dem Rad zugewandten Seite wiederum mit Rollen 9 versehen. Das Fehlen des keilförmigen Elementes 6 sowie des Gelenkes 7 führt dazu, daß die Bremsung ohne Beeinflussung der Rotation des Rades 1 erfolgen kann, so daß insbesondere bei Schienenfahrzeugen eine Führung aufrechterhalten werden kann.

Die Fig. 5C zeigt eine gegenüber der Darstellung in Fig. 5A um 90 Grad gedrehte Seitenansicht der Ausführungsform nach Maßgabe der Fig. 5A, wobei hier über die bereits bekannten Elemente hinaus die konischen Elemente 52 der Rollen 9 dargestellt sind. Eine Notfallbremsvorrichtung gemäß der Ausführungsform nach Fig. 5A und 5C kann auch beidseitig des abzubremsenden Rades 5 vorgesehen sein, wobei hierbei eine Bremsung des Rades durch Aufeinander-zu-Bewegen der Elemente 50 erfolgt.

In der Fig. 5B ist eine Variante der Ausführungsform nach Maßgabe der Fig. 5A dargestellt, die sich insbesondere für den Einsatz bei Schienenfahrzeugen eignet. Gleiche Elemente sind hierbei entsprechend der Fig. 5A bzw. 5C bezeichnet. Wie der Fig. 5B sowie den Schnitten 5D und 5E ohne weiteres zu entnehmen ist, ist das Element 50 hierbei an seiner der Schiene 36 zugewandten Seite mit einer oder mehreren Führungsrollen 10 versehen, die ein die Schienenoberseite umgreifendes Profil 37 aufweisen, um das Element in der Spur zu halten. Die Rollen 10 können, wie in Fig. 5B dargestellt, dabei über Kompressionsfedern 53 höhenverstellbar sein, um eine optimale Anpassung an die Schiene zu gewährleisten. Die Höhenverstellbarkeit kann unabhängig von der Pressung des Elementes gleichförmig bzw. konstant sein. Der Schienenkontakt ist dadurch konstant.

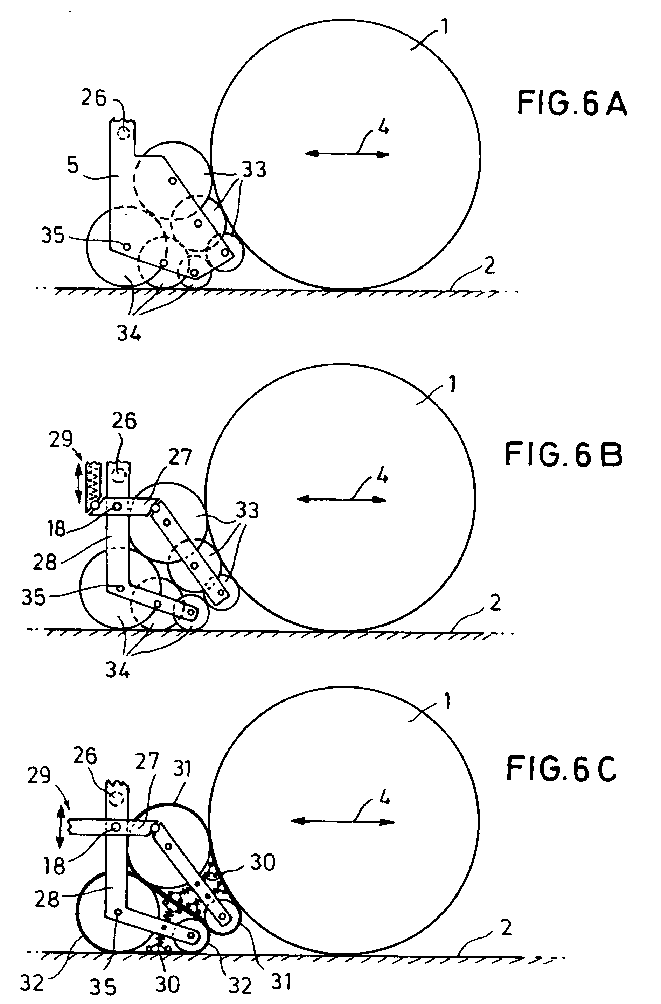

In den Fig. 6A bis F ist eine weitere Ausführungsform der Notfallbremsvorrichtung nach Maßgabe der vorliegenden Erfindung dargestellt, wobei sämtliche Elemente der Notfallbremsvorrichtung durch Rollenanordnungen gebildet sind. Dabei sind gemäß der Fig. 6A an einer Aufhängung 26 unter Umständen miteinander kämmende Rollen 34 über entsprechende Wellen 35 befestigt, die in Kontakt mit dem Boden 2 stehen und von entsprechenden Rollen 33 mit einer durch das abzubremsende Rad 1 induzierten Bremskraft beaufschlagt werden. Der Vorteil bei dieser Ausführungsform ist, daß trotz unterschiedlicher Drehzahlen, die abhängig vom Größenverhältnis der Räder untereinander sind, die Rotationsrichtung der Rollen und deren Oberflächengeschwindigkeit denjenigen des Rades 1 entsprechen. Im wesentlichen wird durch die Vorrichtung nach Maßgabe der Fig. 6A bis 6F erreicht, daß entfernt vom Auflagepunkt des abzubremsenden Rades 1 selbst ein oder mehrere weitere Auflagepunkte bzw. Rollreibflächen geschaffen werden, so daß eine erhöhte Bodenhaftung erreicht wird. Die Anzahl der Rollen 34 bzw. 33 ist dabei nicht auf die in Fig. 6A dargestellte Anzahl begrenzt, sondern kann je nach Anwendungsfall variiert werden. Dabei ist die kleinste keilförmige Einheit gebildet aus zwei ungleichgroßen Bodenrollen 34, die beide von einer Rolle 33 angetrieben werden. Dabei bremst der Rollenkeil, wenn das Rad 1 bremst, und beschleunigt, wenn das Rad 1 beschleunigt. Auf diese Weise kann die vorhandene Normalbremsvorrichtung in ihrer Bremswirkung vergrößert werden, wodurch der Bremsweg in kritischen Haltesituationen deutlich verkürzt werden kann. Die unterschiedlichen Durchmesser der Rollen 33 bzw. 34 führen zu einer Addition unterschiedlicher Hafteigenschaften, wobei eine Klemmtendenz zwischen Rad und Boden 2 besteht, da die Rollen 33 und 34 eine höhere Reibung aufweisen als das Rad 1.

In der Fig. 6B ist eine Abwandlung der in Fig. 6A dargestellten Ausführungsform gezeigt, wobei im wesentlichen Gruppen aus Rollen 34 und Rollen 33 gebildet werden, so daß sich im wesentlichen zwei Komponenten analog der Ausführungsform nach Fig. 3 ergeben, die jeweils in separaten Halterungen 27 und 28 gelagert sind und über ein Gelenk 18 gelenkig miteinander verbunden sind. In der Fig. 6B ist ein beweglicher Arm 29 gezeigt, der eine Höhenanpassung der Notfallbremsvorrichtung ermöglicht.

Die Fig. 6C bis 6F zeigen unterschiedliche Varianten der Ausführungsform nach Maßgabe der Fig. 6A, wobei die Rollen im wesentlichen von Ketten- oder Riemenelementen 31 und 32 umgeben sind, die durch Kettenspannelemente 30 unter Spannung gehalten werden.

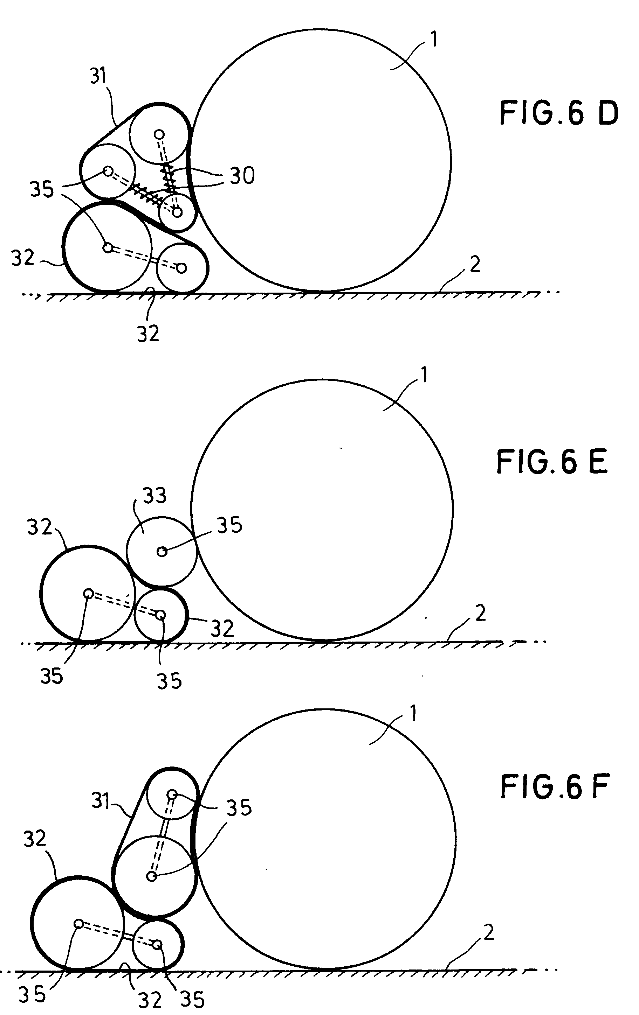

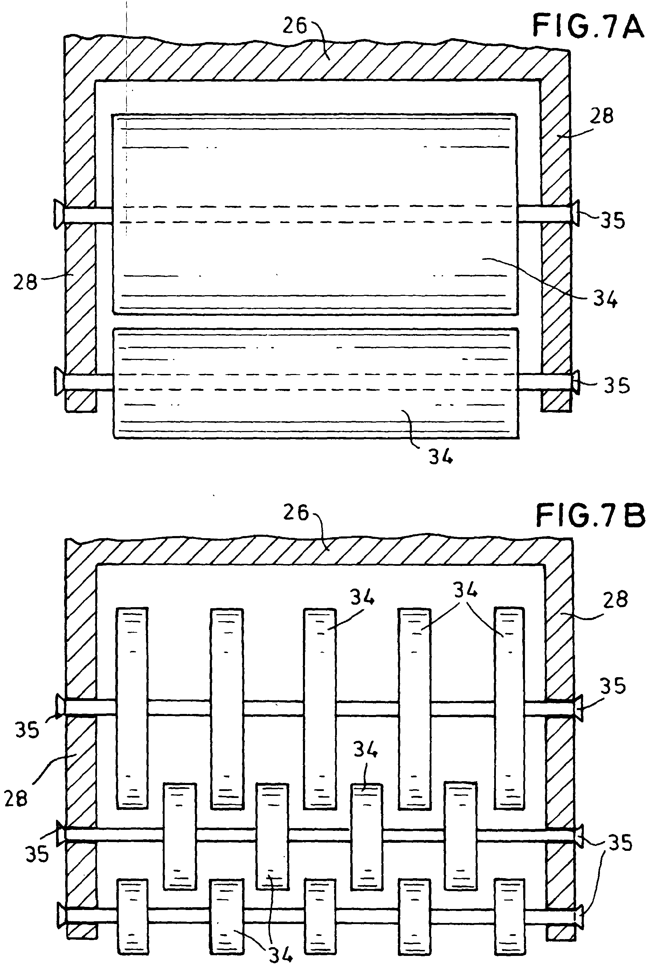

Die Fig. 7A zeigt eine schematische Darstellung der Bodenrollen 34 gemäß der Ausführungsform nach Fig. 6, wobei die Fig. 7B eine mögliche Anordnung von drei miteinander kämmenden Rollenzeilen 34 darstellt, und zwar analog Fig. 6A und 6B.

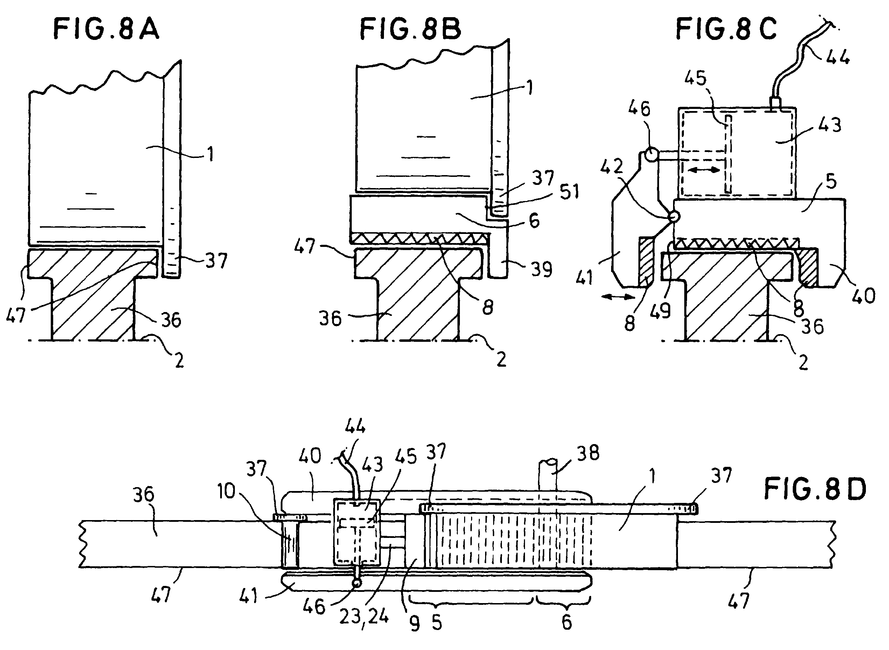

In den Fig. 8A bis D schließlich sind in schematischer Weise Elemente dargestellt, die in Verbindung mit der Notfallbremsvorrichtung nach Maßgabe der vorliegenden Erfindung eine spurtreue Führung von schienengebundenen Fahrzeugen im Fall der Notbremsung ermöglichen. Die Fig. 8A bis 8C zeigen dabei Querschnitte durch die in Fig. 8D in Draufsicht dargestellte Anordnung. Wesentliche Elemente dieser Darstellungen sind dabei bereits den vorhergehenden Ausführungsformen zu entnehmen. Darüber hinaus entnimmt man den Fig. 8A bis 8D eine Radachse 38, ein Antientgleisprofil 39 des Elementes 6, ein Antientgleisprofil 40 des Elementes 5, seitliche Bremsbacken 41, sowie eine gelenkige Aufhängung 42 für die Bremsbacken an dem Element 5 und/oder 6. Es ist gezeigt ein Hydraulikzylinder 43, der wiederum mit einer Hydraulikleitung 44 verbunden ist. In dem Hydraulikzylinder 43 ist ein Kolben 45 angeordnet, der über ein Pleuel mit dem Gelenk 46 verbunden ist, das an dem Bremsbacken 42 befestigt ist und den letzteren in Pressung gegen die Schiene 47 bringen kann, indem er um die Fixierung 42 schwenkt. Ferner ist gezeigt ein seitliches Elementenprofil 49, wobei die Flächenbreite von Element 5 bei einem System wie Fig. 8C mit seitlicher Schienenbremsung weniger breit sein kann als die obere Schienenprofilbreite. Das Bezugszeichen 51 schließlich bezeichnet einen mittleren Querschnitt des Elementes 6.

Natürlich ist die Erfindung nicht auf die einzelnen Ausführungsformen, wie in den Fig. 1 bis 8 dargestellt, beschränkt, sondern erstreckt sich ebenso auf Kombinationen von einzelnen Merkmalen und Elementen der einzelnen Ausführungsformen.

## Patentansprüche

1. Notfallbremsvorrichtung für auf Rädern (1) laufende Fahrzeuge, mit einem am Chassis (3) des Fahrzeuges zugfest zu befestigenden, die Aufstands- oder Kontaktfläche des Fahrzeugs zum Boden vergrößernden mechanischen Element (5), das eine starre Form aufweist und zum Boden (2) hin profiliert ist, wobei das Element (5) so ausgebildet ist, daß es nach dem Auslösen der Notfallbremsvorrichtung auf dem Boden in Bewegungsrichtung vor dem zu bremsenden Rad zu liegen kommt, so daß das zu bremsende Rad auf dieses auffährt bzw. das Element (5) unter das Rad gezogen wird oder das Element gegen das Rad gepreßt wird, dadurch gekennzeichnet, daß das Element (5) in Fahrtrichtung (4) ab einem bestimmten Bereich auf der dem Rad (1) zugewandten Seite mit Rollen (9) versehen ist.

2. Notfallbremsvorrichtung nach Anspruch 1, dadurch gekennzeichnet, daß das Element in seinem unter dem Rad zu liegen kommenden Teil (6) sich in der Höhe verjüngt, und vorzugsweise der Teil (6) durch ein Gelenk (7) mit dem mit Rollen (9) versehenen Teil des Elementes (5) verbunden ist.

3. Notfallbremsvorrichtung nach Anspruch 1 oder 2, dadurch gekennzeichnet, daß das Element (5) mit einem Arm (12) um eine Drehachse (11) schwenkbar gelagert ist.

4. Notfallbremsvorrichtung nach einem der vorhergehenden Ansprüche, dadurch gekennzeichnet, daß das Element einen Rollen-tragenden Teil (17) und einen das Bodenprofil tragenden Teil (16) aufweist, die über ein Gelenk (18) aneinander angelenkt sind, wobei die Teile (16, 17) voneinander beabstandet sind, derart, daß ihr gegenseitiger Abstand durch eine Verstelleinrichtung (22) verändert werden kann und eine Meßeinrichtung (23, 24, 25) vorgesehen ist, die den Abstand bzw. die Anlage der Rollen (9) an dem Rad (1) mißt.

5. Notfallbremsvorrichtung nach einem der vorhergehenden Ansprüche, dadurch gekennzeichnet, daß das Element durch eine Rollen tragende Komponente (17) und eine das Bodenprofil tragende Komponente (16) gebildet ist, die in Fahrtrichtung (4) zueinander translatorisch verschiebbar sind.

6. Notfallbremsvorrichtung nach einem der vorhergehenden Ansprüche, dadurch gekennzeichnet, daß das Element (5) mit einer Antientgleiseinrichtung (10) für Schienenfahrzeuge im Falle einer Notbremsung versehen ist, wobei die Antientgleiseinrichtung (10) durch Rollen oder ein nichtrollendes Profil gebildet ist.

7. Notfallbremsvorrichtung nach einem der vorhergehenden Ansprüche, dadurch gekennzeichnet, daß die Komponenten des Elementes (5) aus Anordnungen von Rollen (33, 34) gebildet sind.

8. Notfallbremsvorrichtung nach einem der vorhergehenden Ansprüche, dadurch gekennzeichnet, daß der bodenprofiltragende Teil des Elementes in seinem nicht am Rad liegenden Bereich höhenverstellbar gegenüber dem Boden ist.

9. Notfallbremsvorrichtung nach einem der vorhergehenden Ansprüche, dadurch gekennzeichnet, daß das Element an der in Fahrtrichtung hinteren Seite des Rades angeordnet ist.

10. Notfallbremsvorrichtung nach Anspruch 2, dadurch gekennzeichnet, daß das Element in seinem unter dem Rad zu liegen kommenden Teil (6) in Fahrtrichtung (4) in der Höhe keilförmig zunimmt.
